(19) Europäisches Patentamt European Patent Office Office européen des brevets

(11) **EP 4 773 190 A1**

(12) **EUROPEAN PATENT APPLICATION**

(43) Date of publication:
08.07.2026 Bulletin 2026/28

(21) Application number: 25222836.6

(22) Date of filing: 12.12.2025

(51) International Patent Classification (IPC):
$H01M\ 4/04^{(2006.01)}$    $H01M\ 4/133^{(2010.01)}$
$H01M\ 4/36^{(2006.01)}$    $H01M\ 4/587^{(2010.01)}$
$H01M\ 10/0525^{(2010.01)}$

(52) Cooperative Patent Classification (CPC):
H01M 4/0471; H01M 4/133; H01M 4/366;
H01M 4/587; H01M 10/0525; H01M 2004/021;
H01M 2004/027; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.12.2024 CN 202411967159

(71) Applicant: AESC Japan Ltd.
Yokohama-shi, Kanagawa 220-0012 (JP)

(72) Inventor: LI, Xin
Jiangyin City, Wuxi City, 214443 (CN)

(74) Representative: Becker, Eberhard
Becker Kurig & Partner
Patentanwälte mbB
Bavariastraße 7
80336 München (DE)

(54) **NEGATIVE ELECTRODE MATERIAL AND PREPARATION METHOD THEREOF AND LITHIUM ION BATTERY**

(57) Provided are a negative electrode material and a preparation method thereof and a lithium ion battery, specifically relating to the technical field of lithium ion batteries. The Young's modulus E of the negative electrode material has a value of: 8GPa≤E≤17Gpa, the negative electrode material includes natural graphite and a coating layer coated on the surface of the natural graphite. The negative electrode material of the disclosure has a relatively high Young's modulus, may better maintain the microscopic crystal structure when lithium ions deintercalate, undergoes smaller irreversible deformation, and has better cycle performance.

Perform crushing and shaping processing on natural flake graphite raw material to obtain a graphite precursor — S1

Perform thermal shaping processing on the graphite precursor, then perform cold quenching processing on the graphite precursor in a gradient temperature reduction manner to obtain a spheroidized precursor — S2

Perform vacuum calcination on the spheroidized precursor, then form a coating layer on a surface of the spheroidized precursor to obtain negative electrode material — S3

**FIG. 1**

EP 4 773 190 A1

**Description**

**BACKGROUND**

Technical Field

The disclosure relates to the field of lithium ion batteries, specifically relates to a negative electrode material and a preparation method thereof and a lithium ion battery.

Related Art

With the development of lithium ion batteries, high capacity batteries have become a current research hotspot. Natural graphite has the advantages of high capacity and large powder compaction, and does not require graphitization, which can greatly reduce energy consumption and carbon dioxide emissions, making the material very suitable for use as lithium ion battery negative electrode under the carbon neutral background. However, natural graphite itself is relatively soft in material, so the material undergoes large volume deformation during lithium ion intercalation and deintercalation processes and cannot recover, that is, irreversible deformation occurs, and the characteristic poses great challenges to the cycle performance of lithium ion batteries.

**SUMMARY**

Given the problems existing in the above related art, the disclosure provides a negative electrode material and a preparation method thereof and a lithium ion battery to address the expansion problem of natural graphite.

To achieve the above objectives and other related objectives, the first aspect of the disclosure provides a negative electrode material, the Young's modulus E of the negative electrode material has a value of: $8GPa \leq E \leq 17GPa$, and the negative electrode material includes natural graphite and a coating layer coated on the surface of the natural graphite.

In one embodiment of the disclosure, the powder compaction P of the negative electrode material under 80MPa has a value of $1.66 \leq P \leq 1.74 g/cm^3$.

In one embodiment of the disclosure, after cold pressing the negative electrode material at 160MPa for 10s, the micropore volume $V_{0.2-2}$ with pore diameter of 0.2 to 2nm is: $14 \leq V_{0.2-2} \leq 20\ cm^3/Kg$.

In one embodiment of the disclosure, the coating layer includes amorphous carbon, and the mass of the amorphous carbon accounts for 2.5% to 6% of the mass of the natural graphite.

In one embodiment of the disclosure, the particle size Dv50 of the negative electrode material is $5\mu m$ to $20\mu m$.

Another aspect of the disclosure provides a preparation method of the negative electrode material, and the preparation method includes the following steps:

> performing crushing and shaping processing on natural flake graphite raw material to obtain a graphite precursor;
> performing thermal shaping processing on the graphite precursor, then performing cold quenching processing on the graphite precursor in a gradient temperature reduction manner to obtain a spheroidized precursor;
> performing vacuum calcination on the spheroidized precursor, then forming a coating layer on the surface of the spheroidized precursor to obtain the negative electrode material.

In one embodiment of the disclosure, the step of performing thermal shaping processing on the graphite precursor, then performing cold quenching processing on the graphite precursor in a gradient temperature reduction manner includes:

> transferring the graphite precursor into a jet mill and heating to a first temperature, performing 100Hz to 140Hz ultra-high frequency thermal shaping for 0.5h to 2h;
> then, introducing first inert gas into the jet mill to cool down to a second temperature, and maintaining ventilation at the second temperature for 1h to 3h while simultaneously shaping;
> then, introducing second inert gas into the jet mill to cool down to a third temperature, and maintaining ventilation for 1h to 3h while simultaneously shaping to get the spheroidized precursor,
> in which the first temperature is 600°C to 800°C, the temperature difference between the first temperature and the second temperature is 100°C to 400°C, the temperature difference between the second temperature and the third temperature is 100°C to 400°C, the flow rate $L_1$ of the first inert gas is 5L/min to 10L/min, and the flow rate $L_2$ of the second inert gas is 30L/min to 60L/min.

In one embodiment of the disclosure, the temperature of the vacuum calcination is 450°C to 550°C, and the step of forming a coating layer on the surface of the spheroidized precursor includes: transferring the precursor after vacuum calcination to a solution containing carbon-containing precursor, stirring, filtering, drying, and collecting powder; then calcining the powder at 750°C to 1100°C for 4 to 8h under inert atmosphere to produce the negative electrode material, and/or, the particle size Dv50 of the graphite precursor is 30μm to 50μm, and the particle size distribution width (Dv90-Dv10)/Dv50<1.1.

In one embodiment of the disclosure, the carbon-containing precursor includes one or more of C9 petroleum resin, phenolic resin, and pitch.

The disclosure further provides a lithium ion battery, the lithium ion battery includes a negative electrode sheet, the negative electrode sheet includes any of the negative electrode materials described above or the negative electrode material prepared by any of the preparation methods described above.

The negative electrode material of the disclosure has a high young's modulus, making the negative electrode material particles have high mechanical strength, which may better maintain the microscopic crystal structure during lithium ion deintercalation, resulting in smaller irreversible deformation, thereby having better cycle performance. In addition, the negative electrode material has a high young's modulus, making the powder compaction of the material maintain within a suitable range, while having high energy density, ensuring high porosity at the electrode sheet level, and having excellent fast charging performance; and the negative electrode material may maintain more micropore volume under high pressure, providing more rapid lithium intercalation channels, ensuring the material has good fast charging performance under high energy density conditions.

When preparing the negative electrode material, the disclosure uses natural flake graphite as raw material, by adjusting the heat treatment process and to performing cold quenching processing on the precursor in a gradient temperature reduction manner, making the material maintain the kinetic performance advantages of natural graphite while having high young's modulus, thereby achieving the characteristics of low expansion and long cycle. The preparation method of the disclosure may effectively improve the expansion performance of natural graphite, and is simple and easy to operate, greatly reducing negative electrode cost and energy consumption.

## BRIEF DESCRIPTION OF THE DRAWINGS

To more clearly illustrate the technical solutions in the embodiments of the disclosure or the related art, the following will briefly introduce the drawings required for use in the description of the embodiments or the related art. Certainly, the drawings in the following description are merely some embodiments of the disclosure. For persons of ordinary skill in the art, other embodiments may also be obtained according to these drawings without creative effort.

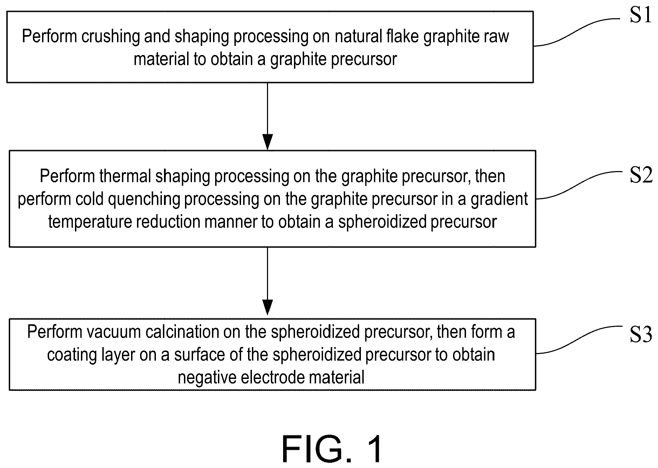

The FIG.1 is a flowchart of a preparation method of a negative electrode material of the disclosure in one embodiment.

## DESCRIPTION OF THE EMBODIMENTS

The following illustrates the implementation of the disclosure through specific examples, and persons skilled in the art may easily understand other advantages and effects of the disclosure from the content disclosed in this specification. The disclosure may also be implemented or applied through other different specific embodiments, and various details in this specification may also be modified or changed based on different viewpoints and applications without departing from the spirit of the disclosure. It should be noted that, in the case of no conflict, the following embodiments and the features in the embodiments may be combined with each other. Test methods without specific conditions noted in the following embodiments are usually performed according to conventional conditions or according to conditions recommended by respective manufacturers.

Unless otherwise defined, all technical and scientific terms used herein have the same meaning as commonly understood by persons of ordinary skill in the art to which the disclosure belongs. The terms used herein in the specification are for the purpose of describing particular embodiments only and is not intended to limit the disclosure. As used herein, the term "and/or" includes any and all combinations of one or more of the associated listed items.

Herein, when numerical ranges are involved, unless otherwise specified, the distribution of selectable numerical values within the numerical range is considered continuous, and includes both numerical endpoints of the numerical range (that is, the minimum value and the maximum value), as well as every numerical value between these two numerical endpoints. When multiple numerical ranges are provided to describe features or characteristics, these numerical ranges may be combined.

Herein, the test of young's modulus refers to GB/T 34186-2017; the test of powder compaction refers to GBT 24533-2009; the test of micropore volume refers to GB/T 19587-2017.

Natural graphite has the advantages of high capacity and large powder compaction, but natural graphite itself is relatively soft in material, and undergoes large volume deformation during the lithium ion intercalation and deintercalation process (cannot return after expansion, that is, irreversible deformation), and the characteristic poses great challenges to the cycle performance of lithium ion batteries. In the related art, there are methods to improve the expansion performance by graphitizing natural graphite. Although this method may improve the expansion performance of natural graphite, the method will also greatly increase cost and energy consumption, and will deteriorate the low temperature performance of natural graphite.

Based on above, the disclosure provides a negative electrode material, a preparation method of the negative electrode material, and a lithium ion battery including the negative electrode material. By controlling the young's modulus of the negative electrode material to make the particles thereof have certain hardness, the microscopic crystal structure may be better maintained during lithium ion deintercalation, smaller irreversible deformation occurs, thereby having better cycle performance.

A first aspect of the disclosure provides a negative electrode material, the negative electrode material includes natural graphite and a coating layer coated on the surface of the natural graphite, and the young's modulus E of the negative electrode material has a value of 8GPa≤E≤17GPa. The Young's modulus represents the degree of initial length change within a unit cross-section after powder is subjected to certain tensile stress, which reflects the deformation condition of the material under stress action. The calculation formula of young's modulus is $E = \sigma/\varepsilon$, where $\sigma$ represents the stress within unit area of the material, and $\varepsilon$ represents the strain within unit length. From the calculation formula of young's modulus, it may be seen that when the stress $\sigma$ within unit area of the material remains unchanged, the larger the young's modulus E, the smaller the strain $\varepsilon$ within unit length, indicating that the material is less likely to deform, that is, the greater the hardness; conversely, the smaller the young's modulus E, the larger the strain $\varepsilon$ within unit length, indicating that the material is more likely to deform, that is, the smaller the hardness. The negative electrode material undergoes lithium ion intercalation and deintercalation during the charge and discharge process of the lithium ion battery. If the hardness of the negative electrode material is small (soft material), large volume deformation occurs during the lithium ion intercalation and deintercalation process, and does not recover, that is, irreversible deformation occurs, which is unfavorable to the cycle of the lithium ion battery; while if the hardness of the negative electrode material is large, the microscopic crystal structure may be better maintained during the lithium ion deintercalation process, smaller irreversible deformation occurs, making the lithium ion battery have better cycle performance; however, if the hardness of the negative electrode material is too large, it is not easy to compact, resulting in too low compaction density of the negative electrode, thereby affecting the energy density of the battery. Therefore, when the young's modulus of the negative electrode material is within an appropriate range, the material may maintain good mechanical strength without affecting the powder compaction of the negative electrode, thereby having better cycle performance. The young's modulus E of conventional natural graphite is below 5GPa, with soft texture and poor cycle performance; the young's modulus E of the negative electrode material of the disclosure is within 8GPa≤E≤17GPa, which may maintain the kinetics of natural graphite while having the characteristics of low expansion and long cycle. In some implementations, the young's modulus E of the negative electrode material may be, for example, 8GPa, 10GPa, 13GPa, or 17GPa.

In one embodiment, the powder compaction P of the negative electrode material under 80MPa has a value of 1.66≤P≤1.74g/cm³. The powder compaction represents the total mass of powder sample per unit volume, which refers to the process where powder material undergoes particle rearrangement under external pressure, with reduced voids, thereby increasing the density thereof. Therefore, under different external pressures, the negative electrode material presents different compaction values. The powder compaction of the negative electrode material of the disclosure adopts 80MPa as the test pressure, corresponding to the preparation conditions of battery negative electrode. The powder compaction is closely related to the compaction density of the negative electrode sheet. The larger the powder compaction, the larger the compaction density of the negative electrode sheet, and the compaction density of the electrode sheet affects the performance of the battery. If the powder compaction of the negative electrode material is too high, then the situation results in too high compaction density of the electrode sheet, making the gaps between particles smaller, and the wetting performance of the electrode sheet becomes increasingly poor, thereby causing difficulty in the intercalation/deintercalation behavior of lithium ions therein, increasing the polarization of the battery; if the powder compaction is too low, then the situation results in too low compaction density of the electrode sheet. Although the operation may improve the wetting performance of the electrode sheet to some extent, the operation causes poor contact performance between negative electrode particles and between negative electrode particles and current collector, thereby reducing the electronic conductivity performance of the negative electrode. Therefore, the negative electrode material having appropriate powder compaction means that the negative electrode sheet has appropriate compaction density.

Furthermore, the powder compaction of the negative electrode material is related to the mechanical strength of the powder itself. The greater the mechanical strength, the higher the hardness of the powder particles, and the less easily they are compacted. Therefore, the powder compaction P of the negative electrode material is negatively correlated with the Young's modulus E of the material, that is, the larger the Young's modulus E, the smaller the powder compaction P; the smaller the Young's modulus E, the larger the powder compaction P. Affected by the Young's modulus E, the powder compaction P of the negative electrode material of the disclosure under 80MPa is 1.66≤P≤1.74g/cm³, which may maintain the relatively high energy density of natural graphite while ensuring relatively high porosity between electrode sheet layers, thereby having excellent fast charging performance. In some implementations, the powder compaction P of the negative electrode material under 80MPa may be, for example, 1.66g/cm$^3$, 1.70g/cm$^3$, or 1.74g/cm$^3$.

In one embodiment, after cold pressing the negative electrode material at 160MPa for 10s, the micropore volume V$_{0.2-2}$ with pore diameter of 0.2 to 2nm is: $14 \leq V_{0.2-2} \leq 20$ cm$^3$/Kg. That is, the total volume of micropores with pore diameter of 0.2 to 2nm is 14 to 20 cm$^3$/Kg. Specifically, it may be, for example, 14 cm$^3$/Kg, 16 cm$^3$/Kg, 18 cm$^3$/Kg, or 20 cm$^3$/Kg. The micropore volume has a significant impact on the electrochemical performance of the negative electrode material. Micropores may provide more active sites, increase the specific surface area of the material, thereby improving the kinetics of electrochemical reactions; and the presence of micropores is beneficial for the wetting of electrolyte and the diffusion of ions, which is crucial for the fast charging performance and cycle stability of the battery. However, if the micropore volume is too large, then the situation leads to increased side reactions, while if the micropore volume is too small, the kinetic performance of the electrochemical reactions of the negative electrode material is poor. The negative electrode material of the disclosure is cold pressed at 160MPa for 10s, and the micropore volume reaches 14 to 20 cm$^3$/Kg, which means that the negative electrode material has abundant pores and may provide more rapid lithium intercalation channels, having good fast charging performance while ensuring relatively high energy density.

In addition, the negative electrode material maintains good pore structure under high pressure of 160MPa, which benefits from the improvement of the mechanical performance of the negative electrode material itself. The Young's modulus of the negative electrode material of the present application is greatly improved compared to existing natural graphite, which means that the particle hardness of the negative electrode material has been significantly improved. With increased material particle hardness, the material is not easily compressed, deformed, or even broken under external force, thereby enabling the negative electrode material to maintain abundant pore structure under high pressure.

In one embodiment, the coating layer is amorphous carbon. Natural graphite surface has abundant functional groups, and amorphous carbon coating on the natural graphite surface may avoid direct contact between natural graphite and electrolyte, reducing side reactions; in addition, the coating of amorphous carbon may also constrain the expansion of natural graphite, further addressing the expansion problem thereof. The amorphous carbon may be, for example, hard carbon or soft carbon. Further, the mass of amorphous carbon accounts for 2.5% to 6% of the mass of natural graphite, which may specifically be exemplified as 2.5%, 4%, or 6%.

In one embodiment, the particle size Dv50 of the negative electrode material is 5μm to 20μm. Dv50 represents the particle size corresponding to when the cumulative volume distribution reaches 50% in the particle size distribution. Exemplarily, the particle size Dv50 of the negative electrode material may be, for example, 5μm, 10μm, 15μm, or 20μm.

The second aspect of the disclosure provides a preparation method of the negative electrode material, and the negative electrode material produced by adopting this preparation method may have relatively high Young's modulus, thereby enabling the negative electrode material to have characteristics of low expansion and long cycle while maintaining natural graphite kinetics.

Referring to FIG.1, the preparation method of the negative electrode material at least includes the following steps:

S1, performing crushing and shaping processing on natural flake graphite raw material to obtain graphite precursor;
S2, performing thermal shaping processing on the graphite precursor, then performing cold quenching processing on the graphite precursor in a gradient temperature reduction manner to obtain a spheroidized precursor;
S3, performing vacuum calcination on the spheroidized precursor, then forming a coating layer on the surface of the spheroidized precursor to obtain the negative electrode material.

Specifically, Step S1 uses natural flake graphite as raw material, and preprocessing is required before performing crushing and shaping processing thereon to remove impurity minerals in the raw material. The preprocessing includes water washing and flotation, first water washing is performed on the natural flake graphite to remove mud, dust, and other impurities on the graphite surface, so as to prepare for the subsequent flotation process. Flotation makes the selective attachment of graphite particles and other impurity minerals on the water surface different by adding flotation reagents, thereby separating graphite from other minerals and improving the purity of natural flake graphite.

Since natural flake graphite has relatively large particle size, which may reach micrometer or even millimeter level, crushing and shaping processing needs to be performed on the natural flake graphite after preprocessing to obtain the graphite precursor with appropriate particle size distribution. The process specifically includes: performing high-frequency shaping on the natural flake graphite after water washing and flotation to reduce the size Dv50 of millimeter-level natural flake graphite to 30 to 50μm, and removing larger and smaller sizes by classification, so that the particle size distribution width thereof (Dv90-Dv10)/Dv50<1.1. The high-frequency shaping may adopt conventional shaping methods in this field, for example, use honeycomb mill to shape natural flake graphite under 90Hz high frequency for 6h, the honeycomb mill may effectively disperse and deagglomerate aggregated graphite flakes, reduce damage to large flake graphite, and improve the quality of graphite products. It should be noted that Dv90 represents the corresponding particle size when cumulative volume distribution reaches 90% in particle size distribution; Dv10 represents the corresponding particle size when cumulative volume distribution reaches 10% in particle size distribution. The particle size distribution width (Dv90-Dv10)/Dv50 is an indicator for measuring particle size uniformity, the larger the particle size distribution width, the wider the particle size distribution, that is, the greater the difference between large particles and small particles; the closer the particle size distribution width is to 0, the more uniform the particle size and the higher the size consistency. Step S1 reduces the particle size Dv50 of natural flake graphite to 30 to 50$\mu$m, and the condition that the particle size distribution width (Dv90-Dv10)/Dv50<1.1 may make the finally produced negative electrode material meet the required specification of the particle size for use. Exemplarily, the Dv50 of graphite precursor may be, for example, 30$\mu$m, 40$\mu$m or 50$\mu$m; the particle size distribution width (Dv90-Dv10)/Dv50 may be, for example, 1, 0.5, or 0.

In Step S2, thermal shaping processing is first performed on the graphite precursor obtained in Step S1, and specifically includes: collecting the graphite precursor obtained in Step S1 and transfer into the jet mill and heat up to a first temperature, and performing ultra-high frequency thermal shaping to improve the spherical degree thereof and compensate material powder compaction. In the operation, the first temperature for thermal shaping is 600°C to 800°C, for example, may be 600°C, 700°C or 800°C, if thermal shaping temperature is too high, then the operation increases the graphitization degree thereof and destroy the original performance of natural graphite; while if thermal shaping temperature is too low, then the operation leads to insufficient heat, and the target mechanical performance cannot be reached in the subsequent cold quenching processing. Exemplarily, the frequency of thermal shaping is 100Hz to 140Hz, for example, 100Hz, 120Hz or 140Hz, and the duration of thermal shaping is 0.5h to 2h, for example, may be 0.5h, 1h, 1.5h or 2h.

After thermal shaping is completed, cold quenching processing is performed on the graphite precursor to obtain higher mechanical performance. Cold quenching processing is to perform gradient cooling on the precursor by using inert gas after thermal shaping, and the inert gas may be, for example, nitrogen, helium, argon. Gradient cooling means cooling to a certain temperature and then maintaining for a period of time; then cooling to another temperature and maintaining for a period of time, and so on, until reaching the set temperature. The temperature difference of each cold quenching processing should not be too large, as too large temperature difference easily generates microcracks inside the graphite. In the disclosure, the temperature difference of cold quenching processing is 100 to 400°C, specifically may be, for example, 100°C, 200°C, 300°C or 400°C. The number of cold quenching processing is at least once, preferably twice, too many times will not significantly improve the performance but will cause energy consumption.

In one embodiment, the cold quenching processing specifically includes: after ultra-high frequency thermal shaping is completed, introducing a first inert gas into the jet mill to cool down to a second temperature, and maintaining ventilation at the second temperature for 1h to 3h while performing shaping;

then, introducing a second inert gas into the jet mill to cool down to a third temperature, and maintaining ventilation for 1h to 3h while performing shaping simultaneously to get the spherical precursor.

In the aforementioned operation, the temperature difference between the second temperature and the thermal shaping temperature (first temperature) is 100°C to 400°C, the temperature difference between the second temperature and the third temperature is 100°C to 400°C. For example, the first temperature is 800°C, the second temperature is 400°C, the third temperature is 200°C; for another example, the first temperature is 600°C, the second temperature is 400°C, the third temperature is 200°C. After each cold quenching processing cooling is completed, maintaining temperature for 1 to 3h may stabilize crystal structure and make the structure maintain fixed microstructure. The duration of temperature maintaining may be, for example, 1h, 2h or 3h, which may be selected according to actual production.

The flow rate of inert gas affects the cooling rate, therefore, the flow rate of inert gas needs to be set within appropriate range. Since the initial temperature during first cooling is high, the cooling rate thereof should not be too large, therefore, the flow rate of first inert gas is relatively smaller; while the second cooling is performed again based on the first cooling, the initial temperature thereof is relatively lower, therefore, during second cooling, the flow rate of inert gas may be appropriately increased. In some implements, the flow rate $L_1$ of first inert gas is 5L/min to 10L/min, exemplarily, the flow rate $L_1$ of first inert gas may be, for example, 5L/min, 8L/min or 10L/min; the flow rate $L_2$ of second inert gas is 30L/min to 60L/min, exemplarily, the flow rate $L_2$ of second inert gas may be, for example, 30L/min, 40L/min, 50L/min or 60L/min. The first inert gas and second inert gas are each independently selected from nitrogen, argon or helium, that is, the first inert gas and second inert gas may be the same or different, preferably the first inert gas and second inert gas are the same, which may reduce production operations and simplify operation process.

Step S3 is to calcine the spherical precursor obtained in Step S2 under vacuum to remove crystalline water and organic groups in the material. The temperature of vacuum calcination is 450°C to 550°C, may be, for example, 450°C, 500°C or 550°C. The duration of calcination may be selected according to actual production conditions, for example, 1 to 3h. After calcination is completed, cooling is performed to room temperature, then coating layer is formed on the precursor after calcination to obtain the negative electrode material. The negative electrode material includes natural graphite and coating layer. The negative electrode material produced by the preparation method has higher young's modulus, appropriate powder compaction and micropore volume, maintains the kinetics of natural graphite while having characteristics of low expansion and long cycle, addressing the expansion problem of natural graphite when used as negative electrode.

In one embodiment, the coating layer formed on the precursor is amorphous carbon, the coating process of amorphous carbon is as follows: transferring the material after vacuum calcination to a solution containing a carbon-containing precursor, stirring, filtering, drying, and collecting powder; then calcining the powder at 750°C to 1100°C for 4 to 8h under inert atmosphere to produce the negative electrode material, the negative electrode material coats a layer of amorphous carbon on the surface of natural graphite, the coating of amorphous carbon may avoid direct contact between natural graphite and electrolyte, reducing side reactions; in addition, amorphous carbon may also constrain the expansion of natural graphite, further addressing the expansion problem of natural graphite.

The carbon-containing precursor in this step is the carbon source of amorphous carbon, including but not limited to one or more of C9 (main chain carbon atom number is 9) petroleum resin, phenolic resin, and asphalt. Further, the carbon-containing precursor is C9 petroleum resin, C9 petroleum resin has small molecular weight, may make the coating of amorphous carbon more uniform. The specific steps are: transferring the product powder after calcination through pipeline to toluene solution dissolved with C9 petroleum resin, the mass fraction of C9 petroleum resin in toluene solution is not limited, may be set according to the coating amount thereof, then after stirring for a period of time, filtering, drying, and collecting powder, here the stirring and drying methods are not limited, the operation may adopt any method in the field that can disperse and mix materials and drying method, for example magnetic stirring, vacuum drying oven drying. Then the collected powder are calcined and carbonized under inert gas atmosphere to obtain natural graphite coated with amorphous carbon. The calcination temperature is 750°C to 1100°C, for example 750°C, 900°C, 1000°C or 1100°C, and the duration of calcination is 4 to 8h, for example 4h, 6h or 8h.

After the above steps are completed, the particle size Dv50 of the produced negative electrode material is 5μm to 20μm.

The third aspect of the disclosure provides a lithium ion battery, and the lithium ion battery includes, for example, non-aqueous electrolyte lithium battery, solid-state lithium battery. Taking non-aqueous electrolyte lithium battery as an example, the lithium ion battery includes a negative electrode sheet, a positive electrode sheet, and a separator set between the positive electrode sheet and the negative electrode sheet, in which the negative electrode sheet includes the negative electrode material of the disclosure or the negative electrode material prepared by the preparation method described above.

Specifically, the negative electrode sheet includes a negative electrode current collector and a negative electrode active material layer set on at least one side surface of the negative electrode current collector. The negative electrode current collector may adopt conventional materials in the field, for example, copper foil, carbon-coated copper foil. The negative electrode active material layer may be set on the surface of one side of the negative electrode current collector, or may be set on the surfaces of both sides. The negative electrode active material layer includes negative electrode active material, negative electrode conductive agent, and negative electrode binder, in which the negative electrode active material is selected from materials capable of intercalating-deintercalating lithium ions. In the disclosure, the negative electrode active material is the negative electrode material described above. In other embodiments, the material may also be a composition of the negative electrode material described above with other materials, for example silicon-based negative electrode material. The silicon-based negative electrode material includes, for example, silicon oxide compound $SiO_x(0<x<2)$, silicon-carbon material, silicon element. However, the present application is not limited to these materials listed above, and other conventional materials that can be used as negative electrode active materials may also be used. These negative electrode active materials may be used alone, or two or more may be used in combination. The negative electrode conductive agent may improve electronic conductivity, and plays a role of collecting micro-current between negative electrode active materials and between negative electrode active material and negative electrode current collector, so as to reduce the contact resistance of the battery and accelerate the movement rate of electrons. In some embodiments, the negative electrode conductive agent includes, for example, at least one of conductive carbon black (SP), conductive graphite, carbon fiber, carbon nanotube, graphene. Optionally, the negative electrode conductive agent is conductive carbon black; or composition of carbon fiber and conductive carbon black; or composition of carbon nanotube and graphene. The binder is used to bond the negative electrode active material and negative electrode conductive agent, and provides certain adhesive force for the negative electrode active material layer to make the material adhere to the negative electrode current collector. As an example, the negative electrode binder is selected from at least one of polyacrylic acid (PAA), polyvinylidene fluoride (PVDF), styrene-butadiene rubber (SBR), carboxymethyl cellulose (CMC), styrene-acrylate, acrylic multi-copolymer, for example, the negative electrode binder is polyvinylidene fluoride, or composition of styrene-butadiene rubber and carboxymethyl cellulose. For the ratio of negative electrode active material, negative electrode conductive agent, and negative electrode binder, reference may be made to conventional settings in the field.

The preparation process of the negative electrode sheet is exemplified as follows: first, the negative electrode active material, negative electrode conductive agent, and negative electrode binder are mixed and stirred uniformly in a solvent such as deionized water according to a certain ratio to form negative electrode slurry, then the negative electrode slurry is coated on the negative electrode current collector, and after processes such as drying, rolling, cutting, the negative electrode sheet is obtained.

The positive electrode sheet includes a positive electrode current collector and a positive electrode active material layer set on at least one side surface of the positive electrode current collector. The positive electrode current collector may adopt conventional materials in the art, for example, aluminum foil, carbon-coated aluminum foil. The positive electrode active material layer may be set on the surface of one side of the positive electrode current collector, or may be set on the surfaces of both sides. The positive electrode active material layer includes positive electrode active material, positive electrode conductive agent, and positive electrode binder, in which the positive electrode active material may select any positive electrode material applicable to lithium ion batteries, that is, compounds that reversibly intercalate and deintercalate lithium ions may all be used. As an example, the positive electrode active material may be ternary materials, for example, nickel cobalt manganese ternary material (NCM), nickel cobalt aluminum ternary material (NCA), may be iron lithium positive electrode materials, for example, lithium iron phosphate (LFP), lithium manganese iron phosphate (LMFP), and may also be conventional materials such as lithium cobaltate, lithium manganate. These materials may be used alone or in combination. The positive electrode binder is for example any one or more of polyvinylidene fluoride (PVDF), polyethylene oxide (PEO), polyamide (PA), polyacrylonitrile (PAN), polyacrylate, polyvinyl ether, polymethyl methacrylate (PMMA), ethylene-propylene-diene terpolymer (EPDM), polyhexafluoropropylene or styrene-butadiene rubber (SBR). The positive electrode conductive agent includes but is not limited to at least one of conductive carbon black (SP), conductive graphite, carbon fiber, carbon nanotube, graphene. Optionally, the conductive agent is conductive carbon black; or a composition of carbon fiber and conductive carbon black; or a composition of carbon nanotube and graphene. For the ratio of positive electrode active material, positive electrode conductive agent, and positive electrode binder, reference may be made to conventional settings in the field.

The preparation process of the positive electrode sheet is exemplified as follows: first, the positive electrode active material, positive electrode conductive agent, and positive electrode binder are mixed and stirred uniformly in a solvent such as N-methylpyrrolidone (NMP) according to a certain ratio to form positive electrode slurry, then the positive electrode slurry is coated on the positive electrode current collector, and after processes such as drying, rolling, cutting, the positive electrode sheet is obtained.

The separator is set between the positive electrode sheet and the negative electrode sheet, used to separate the positive electrode sheet and the negative electrode sheet, prevent short circuit inside the battery, and simultaneously make lithium ions able to pass through and move between the positive electrode and negative electrode to realize the charge and discharge process of the battery. The separator may select porous materials such as polyethylene film (Polyethylene, PE), polypropylene film (Polypropylene, PP), glass fiber film or composite film. The thickness of the separator is 9 to 18μm, the air permeability is 180s/100mL to 380s/100mL; the porosity is 30% to *50%.*

The lithium ion battery further includes electrolyte, during the charge and discharge process of the battery, the electrolyte plays a role in performing lithium ions. The electrolyte includes organic solvent and lithium salt, the lithium salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluorobis(oxalato)phosphate (LiDFOP), and lithium tetrafluoro(oxalato)phosphate (LiTFOP). Further, the lithium salt adopts lithium hexafluorophosphate with better comprehensive performance or a composition of lithium hexafluorophosphate with other lithium salts, for example, a composition of lithium hexafluorophosphate and lithium bis(fluorosulfonyl)imide. The organic solvent may be selected from one or several of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC). The electrolyte may further include functional additives, for example, fluoroethylene carbonate (FEC), prop-1-ene-1,3-sultone (PST), tetravinylsilane (TVSI), vinylene carbonate (VC), ethylene sulfate (DTD), which may be specifically added according to the requirements in actual production.

Battery assembly: the prepared positive electrode sheet, separator, and negative electrode sheet are sequentially placed, making the separator located in the middle of the positive electrode and negative electrode sheets to play an isolation role, and a bare battery cell is obtained through winding or stacking. The bare battery cell is loaded into a battery case, and after assembly, electrolyte injection, formation, capacity grading and other processes, a lithium ion battery is obtained.

In other embodiments, the lithium ion battery may further be a solid-state lithium ion battery, the electrolyte of the solid-state lithium ion battery is solid, common solid electrolytes are, for example, oxide solid electrolyte, halide solid electrolyte, sulfide solid electrolyte, which are not described in detail here, and persons skilled in the art may select according to actual production needs.

It should be noted that, the structures not described in detail in the above lithium ion battery may all be set with reference to the related art, so details will not be repeated here.

The lithium ion battery of the disclosure may be used in electronic devices in the form of a single battery, battery module, or battery pack to provide power for them. Electronic devices include but are not limited to, for example, mobile phones, tablets, laptop computers, electric toys, electric vehicles, new energy vehicles, ships, and spacecraft. Among them, electric toys may include fixed or mobile electric toys, for example, game consoles, electric car toys, electric ship toys and electric airplane toys, spacecraft may include, for example, airplanes, rockets, space shuttles and spaceships. New energy vehicles may be, for example, pure electric vehicles, hybrid vehicles or range-extended vehicles.

The technical solution of the disclosure is described in detail below through several specific embodiments and comparative examples. Unless otherwise specified, the raw materials and reagents used in the following embodiments are all commercially available products, or may be prepared by conventional methods in the art, and the instruments used in the embodiments are all commercially available.

Example 1

This embodiment provides a negative electrode material, and the negative electrode material includes natural graphite and amorphous carbon, in which the amorphous carbon is uniformly coated on the surface of the natural graphite, and the coating amount of the amorphous carbon accounts for 4% of the mass of the natural graphite. The young's modulus E of the negative electrode material is 13GPa, the powder compaction P is 1.7g/cm$^3$, and the micropore volume $V_{0.2-2}$ is 16.7cm$^3$/Kg; the particle size Dv50 of the negative electrode material is 12.1μm.

This embodiment further provides a preparation method of the negative electrode material, including the following steps.

Step 1: High frequency shaping is performed on the natural flake graphite after water washing and flotation with a honeycomb mill at 90Hz for 6h to reduce the size Dv50 of millimeter-level natural flake graphite to 30 to 50μm, and larger and smaller sizes are removed by classification, so that the particle size distribution width thereof (Dv90-Dv10) / Dv50 is less than **1.1.**

Step 2: The above powder is collected and transferred into the jet mill and heated up to T1: 600°C, 120Hz ultra-high frequency shaping is performed for 1h, then inert gas is introduced from the upper end of the jet mill to cool down to T2: 400°C, the flow rate of inert gas is $L_1$: 10L/min, ventilation is maintained for 2h and shaping is performed simultaneously; then inert gas is introduced from the upper end of the jet mill again to cool down to T3: 200°C, the flow rate $L_2$ of inert gas is 30L/min, ventilation is maintained for 2h and shaping is performed simultaneously, then heating is stopped to obtain the spherical precursor.

Step 3: The above spherical precursor is calcined under vacuum at 500°C for 1h, then cooled down to room temperature, transferred through pipeline into a toluene solution containing dissolved C9 petroleum resin (the mass fraction of C9 petroleum resin is 20%), stirred for 5h, filtered, dried, and the powder is collected.

Step 4: The above powder is calcined at 900°C under inert gas atmosphere for 6h, then cooled down to room temperature to the obtain spherical natural graphite coated with amorphous carbon having a particle size of 12.1μm.

Referring to Table 1, the disclosure further provides Examples 2 to 8 and Comparative Examples 1 to 7.

Example 2 differs from Example 1 in that, the young's modulus E of the negative electrode material is 17GPa, the powder compaction P is 1.66 g/cm$^3$, the micropore volume $V_{0.2-2}$ is 19.2 cm$^3$/Kg, and the particle size Dv50 of the negative electrode material is 11.5μm.

The thermal shaping temperature T1 in the preparation method is changed to 800°C.

Example 3 differs from Example 1 in that, the young's modulus E of the negative electrode material is 8GPa, the powder compaction P is 1.74 g/cm$^3$, the micropore volume $V_{0.2-2}$ is 14.5 cm$^3$/Kg, and the particle size Dv50 of the negative electrode material is 13.2μm.

The first cold quenching temperature T2 in the preparation method is changed to 500°C.

Example 4 differs from Example 1 in that, the young's modulus E of the negative electrode material is 11GPa, the powder compaction P is 1.72 g/cm$^3$, the micropore volume $V_{0.2-2}$ is 15.6cm$^3$/Kg, and the particle size Dv50 of the negative electrode material is 12.7μm.

The inert gas flow rate $L_1$ in the preparation method is changed to 5L/min.

Example 5 differs from Example 1 in that, the young's modulus E of the negative electrode material is 16GPa, the powder compaction P is 1.68 g/cm$^3$, the micropore volume $V_{0.2-2}$ is 17.8 cm$^3$/Kg, and the particle size Dv50 of the negative electrode material is 11.6μm.

The inert gas flow rate $L_2$ in the preparation method is changed to 60L/min.

Example 6 differs from Example 1 in that, the young's modulus E of the negative electrode material is 16GPa, the powder compaction P is 1.67 g/cm$^3$, the micropore volume $V_{0.2-2}$ is 11.4 cm$^3$/Kg, and the particle size Dv50 of the negative electrode material is 11.4μm.

The thermal shaping temperature T1 in the preparation method is changed to 700°C, the inert gas flow rate $L_1$ is changed to 8 L/min, and $L_2$ is changed to 40L/min.

Example 7 differs from Example 1 in that, the young's modulus E of the negative electrode material is 8GPa, the powder compaction P is 1.77 g/cm$^3$, the micropore volume $V_{0.2-2}$ is 14cm$^3$/Kg, the particle size Dv50 of the negative electrode material is 8.9μm, and the coating amount of amorphous carbon accounts for 2.5% of the mass of natural graphite.

In Step 3 of the preparation method, the mass fraction of C9 petroleum resin in the toluene solution containing C9 petroleum resin is 12.5%.

Example 8 differs from Example 1 in that, the young's modulus E of the negative electrode material is 17GPa, the powder compaction P is 1.67 g/cm$^3$, the micropore volume $V_{0.2-2}$ is 20cm$^3$/Kg, the particle size Dv50 of the negative electrode material is 12.8$\mu$m, and the coating amount of amorphous carbon accounts for 6% of the mass of natural graphite.

In Step 3 of the preparation method, the mass fraction of C9 petroleum resin in the toluene solution containing C9 petroleum resin is 30%.

Comparative Example 1 differs from Example 1 in that, the young's modulus E of the negative electrode material is 6GPa, the powder compaction P is 1.82 g/cm$^3$, the micropore volume $V_{02-2}$ is 15.6cm$^3$/Kg, and Dv50 is 14.3$\mu$m.

The preparation method does not perform the step of thermal shaping.

Comparative Example 2 differs from Example 1 in that, the young's modulus E of the negative electrode material is 5GPa, the powder compaction P is 1.85g/cm$^3$, the micropore volume $V_{02-2}$ is 12.3cm$^3$/Kg, and Dv50 is 15.2$\mu$m.

The preparation method does not perform the steps of thermal shaping and T2 temperature raising, and directly performs cold quenching at T3 temperature.

Comparative Example 3 differs from Example 1 in that the young's modulus E of the negative electrode material is 20GPa, the powder compaction P is 1.60g/cm$^3$, the micropore volume $V_{0.2-2}$ is 21.3cm$^3$/Kg, and Dv50 is 10.9$\mu$m.

The preparation method does not perform the step of temperature maintaining after cold quenching at T2 temperature.

Comparative Example 4 adopts commercially available natural graphite, which differs from Example 1 in that, the young's modulus E of the negative electrode material is 2GPa, the powder compaction P is 1.79g/cm$^3$, the micropore volume $V_{02-2}$ is 10.1cm$^3$/Kg, and Dv50 is 11.2$\mu$m.

Comparative Example 5 differs from Example 1 in that, the young's modulus E of the negative electrode material is 22GPa, the powder compaction P is 1.63g/cm$^3$, the micropore volume $V_{0.2-2}$ is 22.4cm$^3$/Kg, and Dv50 is 11.7$\mu$m.

The preparation method adopts one-time cold quenching processing, that is, T2 is 200°C, and does not perform T3 cold quenching processing.

Comparative Example 6 differs from Example 1 in that, the young's modulus E of the negative electrode material is 27GPa, the powder compaction P is 1.54g/cm$^3$, the micropore volume $V_{0.2-2}$ is 32.7cm$^3$/Kg, and Dv50 is 10.6$\mu$m.

The thermal shaping temperature T1 in the preparation method is 1000°C, and the cold quenching processing temperature T2 is 400°C.

Comparative Example 7 differs from Example 1 in that, amorphous carbon is not coated, the young's modulus E of the negative electrode material is 6GPa, the powder compaction P is 1.82 g/cm$^3$, the micropore volume $V_{0.2-2}$ is 14cm$^3$/Kg, and the particle size Dv50 of the negative electrode material is 10.6$\mu$m.

In the preparation method, after calcination in Step S3 is completed, cooling down to room temperature completes the preparation, without mixing with toluene solution containing dissolved C9 petroleum resin and calcination in Step S4.

Table 1: Parameter characteristics and preparation method parameters of negative electrode materials of Examples 1 to 8 and Comparative Examples 1 to 7

| Number | E GPa | P g/cm$^3$ | $V_{0.2-2}$ cm$^3$/Kg | Dv50/$\mu$m | Carbon coating amount | T1/°C | T2/°C | T3/°C | $L_1$ (L/min) | $L_2$ (L/min) |
|---|---|---|---|---|---|---|---|---|---|---|
| Example 1 | 13 | 1.70 | 16.7 | 12.1 | 4% | 600 | 400 | 200 | 10 | 30 |
| Example 2 | 17 | 1.66 | 19.2 | 11.5 | 4% | 800 | 400 | 200 | 10 | 30 |
| Example 3 | 8 | 1.74 | 14.5 | 13.2 | 4% | 600 | 500 | 200 | 10 | 30 |
| Example 4 | 11 | 1.72 | 15.6 | 12.7 | 4% | 600 | 400 | 200 | 5 | 30 |
| Example 5 | 16 | 1.68 | 17.8 | 11.6 | 4% | 600 | 400 | 200 | 10 | 60 |
| Example 6 | 16 | 1.67 | 18.5 | 11.4 | 4% | 700 | 400 | 200 | 8 | 40 |
| Example 7 | 8 | 1.77 | 14 | 8.9 | 2.5% | 600 | 200 | 200 | 10 | 30 |
| Example 8 | 17 | 1.67 | 20 | 12.8 | 6% | 600 | 200 | 200 | 10 | 30 |
| Comparative Example 1 | 6 | 1.82 | 15.6 | 14.3 | 4% | without thermal shaping | 400 | 200 | 10 | 30 |

(continued)

| Number | E GPa | P g/cm$^3$ | V$_{0.2-2}$ cm$^3$/Kg | Dv50/μm | Carbon coating amount | T1/°C | T2/°C | T3/°C | L$_1$ (L/min) | L$_2$ (L/min) |
|---|---|---|---|---|---|---|---|---|---|---|
| comparative example 2 | 5 | 1.85 | 12.3 | 15.2 | 4% | without thermal shaping | not heated up | 200 | 10 | 30 |
| Comparative Example 3 | 20 | 1.60 | 21.3 | 10.9 | 4% | 600 | 400, without temperature maintaining | 200 | 10 | 30 |
| Comparative Example 4 commercially available | 2 | 1.79 | 10.1 | 11.2 | 4% | / | / | / | / | / |
| Comparative Example 5 | 22 | 1.63 | 22.4 | 11.7 | 4% | 600 | 200 | / | 10 | / |
| Comparative Example 6 | 27 | 1.54 | 32.7 | 10.6 | 4% | 1000 | 400 | 200 | 10 | 30 |
| Comparative Example 7 | 6 | 1.82 | 14 | 10.6 | 0 | 600 | 200 | 200 | 10 | 30 |

To validate the performance of the negative electrode material of the disclosure, the inventor respectively applied the negative electrode materials of Examples 1 to 8 and Comparative Examples 1 to 7 in lithium ion batteries, and performed performance tests on each lithium ion battery. The composition and test method of the lithium ion batteries are as follows, and the test results are shown in Table 2.

The lithium ion battery includes a positive electrode sheet, a negative electrode sheet, a separator, and an electrolyte. The positive electrode sheet, separator, and negative electrode sheet are wound to obtain a battery core, which is then packaged in a packaging shell and injected with electrolyte to produce a pouch battery.

In the operation, the preparation of the negative electrode sheet: the negative electrode material obtained from the examples or comparative examples, conductive agent (SP), binder (PAA and SBR, with a mass ratio of 1.3:0.5) and thickener carboxymethyl cellulose (CMC) are mixed according to a mass ratio of 97.2:0.5:1.8:0.5 (totaling 100 parts by mass), then 82 parts by mass of deionized water is added and mixed uniformly to obtain negative electrode slurry; then the negative electrode slurry is uniformly coated on copper foil; after drying, rolling, cutting and other processes, the negative electrode sheet is obtained.

Preparation of the positive electrode sheet: positive electrode active material NCM622 (LiNi$_{0.6}$Co$_{0.2}$Mn$_{0.2}$O$_2$), PVDF and SP are mixed according to a mass ratio of 97:1.8:1.2 (totaling 100 parts by mass), then 82 parts by mass of NMP is added to obtain positive electrode slurry; the obtained positive electrode slurry is coated on at least one surface of aluminum foil, dried, and roll-pressed for compaction to obtain the positive electrode sheet.

Separator: polyethylene film, the thickness of the separator is 11μm; the air permeability of the separator is 230s/100mL; the porosity of the separator is 40%.

The electrolyte adopts commercial electrolyte (manufacturer: Xinya Shanshan Advanced Materials (Quzhou) Co., Ltd., model E3).

Battery Performance Test Method

(1) Full battery first efficiency

Full battery charge capacity: the lithium ion battery is charged with 1C current to 4.35V, the charge capacity of this stage is recorded as c1, then charged at constant voltage until the cutoff current is 0.05C, the charge capacity of this stage is c2, and the full battery charge capacity is the sum of c1 and c2.

Full battery discharge capacity: after the fully charged battery cell rests for 30min, discharge is performed with 1C current to 2.8V, the discharge capacity c3 of this stage is recorded, which is the full battery discharge capacity.

First efficiency = full battery discharge capacity c3/full battery charge capacity (c1+c2)×100%.

(2) Fast charge time

Charging is performed with 0.33C current directly to 8% SOC state, then according to the battery cell actual three-electrode window test, the charge windows of 10%, 20%, 30%, 40%, 50%, 60%, 70%, 80% are c1, c2, c3, c4, c5, c6, c7, c8 respectively, step charging is adopted to charge to 80%, that is, c1 is used for 8% to 10%, c2 is used for 10% to 20%, and so on, the charge time from 8% to 80% SOC state is recorded as the fast charge capability measurement standard, and the calculation formula is:

$$T(8\%-80\%)=(0.02/c1+0.1/c2+0.1/c3+0.1/c4+0.1/c5+0.1/c6+0.1/c7+0.1/c8)*60.$$

(3) Room temperature cycle number

**[0099]** Under 25°C conditions, cycle is performed with 0.21A/g (calculated based on positive electrode active material mass), 2.8 to 4.25V charge-discharge regime, the cycle number when cycled to 80% of initial capacity is recorded, as the material cycle performance effect.

(4) Storage days

Under 25°C, constant-capacity test is performed with 0.33C current and recorded as C0, then the battery cell is stored under 60°C high temperature conditions for storage, then the battery cell is taken out every 7 days to test capacity at room temperature and recorded as C1, C2, ......, Cn, until the days when Cn is first less than or equal to 80% of C0 as the storage capability measurement standard, recorded as storage days.

Table 2: Performance of assembled batteries of Examples 1 to 8 and Comparative Examples 1 to 7

| Number | Discharge capacity (mAh/g) | Full battery first efficiency (%) | Fast charging time/min | Room temperature cycle number/cycle | Storage days/days |
|---|---|---|---|---|---|
| Example 1 | 363.2 | 91.4 | 13.1 | 3130 | 280 |
| Example 2 | 365.6 | 90.8 | 11.8 | 3081 | 266 |
| Example 3 | 362.6 | 91.9 | 14.0 | 3367 | 301 |
| Example 4 | 362.8 | 91.6 | 13.6 | 3267 | 294 |
| Example 5 | 365.0 | 91.0 | 12.7 | 3102 | 280 |
| Example 6 | 363.2 | 91.2 | 12.5 | 3156 | 273 |
| Example 7 | 364.2 | 91.9 | 15.1 | 2738 | 294 |
| Example 8 | 362.6 | 90.7 | 13.1 | 2488 | 259 |
| Comparative Example 1 | 367.2 | 89.3 | 16.2 | 1898 | 217 |
| comparative Example 2 | 368.1 | 89.9 | 17.8 | 1634 | 224 |
| Comparative Example 3 | 362.2 | 87.6 | 14.6 | 1298 | 189 |
| Comparative Example 4 | 362.8 | 90.2 | 15.8 | 1023 | 175 |
| Comparative Example 5 | 360.7 | 89.2 | 14.9 | 1371 | 217 |
| Comparative Example 6 | 357.7 | 86.3 | 12.9 | 891 | 98 |
| Comparative Example 7 | 365.0 | 91.9 | 17.1 | 2430 | 350 |

From Table 1 to Table 2, it may be seen that, by adjusting the heat treatment parameters during the preparation process, the Young's modulus, powder compaction and micropore volume of the negative electrode material can be adjusted. The Young's modulus of the negative electrode materials prepared in Examples 1 to 8 has been significantly improved compared to the currently commercially available natural graphite (Comparative Example 4), and the assembled batteries have significantly improved cycle performance, fast charging performance and storage performance at room temperature compared to Comparative Example 4. The result illustrates that appropriately improving the Young's modulus of the negative electrode material can maintain the microscopic crystal structure during lithium ion deintercalation, reduce irreversible deformation, thereby improving cycle performance. Meanwhile, with the improvement of the Young's modulus of the negative electrode material, powder compaction and micropore volume also change accordingly, making the material have good porosity and good electrolyte wettability, thereby having good fast charging performance.

In Example 7, the amorphous carbon coating amount of the negative electrode material is relatively less compared to other examples, causing the volume expansion of the negative electrode material to be relatively large and the stability to be poor, so the cycle number is also smaller compared to other examples; in Example 8, the amorphous carbon coating amount of the negative electrode material is relatively more compared to other examples, the powder compaction of the negative electrode material is poor, under the same compaction density of the electrode sheet, the porosity (relative to other examples) is smaller, and the electrolyte wettability is poor, so the cycle number is also smaller.

The Young's modulus, powder compaction or micropore volume of the negative electrode materials of Comparative Examples 1 to 3 and Comparative Examples 5 to 6 exceed the range defined by the present application, and the cycle performance, fast charging performance and storage performance of their assembled batteries are all inferior compared to Examples 1 to 8. The negative electrode material of Comparative Example 7 only contains natural graphite, the surface of natural graphite is not coated with amorphous carbon. Since the surface activity of amorphous carbon is relatively better than natural graphite, when the surface of natural graphite is not coated with amorphous carbon, compared to the case of coating with amorphous carbon, side reactions will be reduced and high temperature storage performance is relatively better, but fast charging performance and cycle performance will become worse.

The negative electrode material provided by the disclosure has a high Young's modulus, making the negative electrode material particles have high mechanical strength, which can better maintain the microscopic crystal structure during lithium ion deintercalation, undergo smaller irreversible deformation, thereby having better cycle performance. In addition, since the negative electrode material has a high Young's modulus, the powder compaction of the material is maintained within a suitable range, while having high energy density, ensuring high porosity at the electrode sheet level and having excellent fast charging performance; and the negative electrode material maintains more micropore volume under high pressure, making the material have more rapid lithium intercalation channels, ensuring the material has good fast charging performance under relatively high energy density conditions. Therefore, the disclosure effectively overcomes some practical problems in the related art and thus has high utilization value and practical significance.

## Claims

1. A negative electrode material, wherein a Young's modulus E of the negative electrode material has a value of $8\text{GPa} \leq E \leq 17\text{Gpa}$, and the negative electrode material comprises natural graphite and a coating layer coated on a surface of the natural graphite.

2. The negative electrode material according to claim 1, wherein a powder compaction P of the negative electrode material under 80Mpa has a value of $1.66 \leq P \leq 1.74 \text{g/cm}^3$.

3. The negative electrode material according to claim 1 or 2, wherein after cold pressing the negative electrode material at 160Mpa for 10s, a micropore volume $V_{0.2\text{-}2}$ with a pore diameter of 0.2 to 2nm is: $14 \leq V_{0.2\text{-}2} \leq 20 \text{ cm}^3/\text{Kg}$.

4. The negative electrode material according to claim 1, wherein the coating layer comprises amorphous carbon, and a mass of the amorphous carbon accounts for 2.5% to 6% of a mass of the natural graphite.

5. The negative electrode material according to claim 1, wherein a particle size Dv50 of the negative electrode material is $5\mu\text{m}$ to $20\mu\text{m}$.

6. A preparation method of the negative electrode material according to claim 1, comprising steps as follows:

    performing crushing and shaping processing on natural flake graphite raw material to obtain a graphite precursor;
    performing thermal shaping processing on the graphite precursor, then performing cold quenching processing on the graphite precursor in a gradient temperature reduction manner to obtain a spheroidized precursor;
    performing vacuum calcination on the spheroidized precursor, then forming a coating layer on a surface of the spheroidized precursor to obtain the negative electrode material.

7. The preparation method of the negative electrode material according to claim 6, wherein a step of performing thermal shaping processing on the graphite precursor, then performing cold quenching processing on the graphite precursor in a gradient temperature reduction manner comprises:

transferring the graphite precursor into a jet mill and heating up to a first temperature, and performing 100Hz to 140Hz ultra-high frequency thermal shaping for 0.5h to 2h;

then, introducing a first inert gas into the jet mill to cool down to a second temperature, and maintaining ventilation at the second temperature for 1h to 3h while simultaneously shaping;

then, introducing a second inert gas into the jet mill to cool down to a third temperature, and maintaining ventilation for 1h to 3h while simultaneously shaping to obtain the spheroidized precursor,

wherein the first temperature is 600°C to 800°C, a temperature difference between the first temperature and the second temperature is 100°C to 400°C, a temperature difference between the second temperature and the third temperature is 100°C to 400°C, a flow rate $L_1$ of the first inert gas is 5L/min to 10L/min, and a flow rate $L_2$ of the second inert gas is 30L/min to 60L/min.

8. The preparation method of the negative electrode material according to claim 6, wherein a temperature of the vacuum calcination is 450°C to 550°C, and a step of forming the coating layer on the surface of the spheroidized precursor comprises: transferring the precursor after vacuum calcination to a solution containing a carbon-containing precursor, stirring, filtering, drying, and collecting powder; then calcining the powder at 750°C to 1100°C for 4 to 8h under inert atmosphere to produce the negative electrode material,

and/or, a particle size Dv50 of the graphite precursor is 30μm to 50μm, and a particle size distribution width thereof (Dv90-Dv10)/Dv50<1.1.

9. The preparation method of the negative electrode material according to claim 8, wherein the carbon-containing precursor comprises one or more of C9 petroleum resin, phenolic resin, and pitch.

10. A lithium ion battery, comprising a negative electrode sheet, wherein the negative electrode sheet comprises the negative electrode material according to any one of claims 1 to 5 or the negative electrode material prepared by the preparation method according to any one of claims 6 to 9.

```
┌────────────────────────────────────────────────────────────────┐
│  Perform crushing and shaping processing on natural flake       │        S1
│  graphite raw material to obtain a graphite precursor           │
└────────────────────────────────────────────────────────────────┘
                              │
                              ▼
┌────────────────────────────────────────────────────────────────┐
│  Perform thermal shaping processing on the graphite precursor,  │        S2
│  then perform cold quenching processing on the graphite         │
│  precursor in a gradient temperature reduction manner to        │
│  obtain a spheroidized precursor                                │
└────────────────────────────────────────────────────────────────┘
                              │
                              ▼
┌────────────────────────────────────────────────────────────────┐
│  Perform vacuum calcination on the spheroidized precursor,      │        S3
│  then form a coating layer on a surface of the spheroidized     │
│  precursor to obtain negative electrode material                │
└────────────────────────────────────────────────────────────────┘
```

# FIG. 1

## EUROPEAN SEARCH REPORT

**Application Number**

EP 25 22 2836

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/328220 A1 (CHOI HEE WON [KR] ET AL) 21 October 2021 (2021-10-21) * paragraph [0002] * * claims 1-12 * ----- | 1-10 | INV. H01M4/04 H01M4/133 H01M4/36 H01M4/587 H01M10/0525 |
| A | US 2022/416244 A1 (ZENG YUQUN [CN] ET AL) 29 December 2022 (2022-12-29) * claims 1-20 * ----- | 1-10 | |

**TECHNICAL FIELDS SEARCHED (IPC)**

H01M

The present search report has been drawn up for all claims

| Place of search | Date of completion of the search | Examiner |
|---|---|---|
| Munich | 26 May 2026 | Kuhn, Tanja |

EPO FORM 1503 03.82 (P04C01)

## ANNEX TO THE EUROPEAN SEARCH REPORT
## ON EUROPEAN PATENT APPLICATION NO.

EP 25 22 2836

This annex lists the patent family members relating to the patent documents cited in  the above-mentioned European search report.
The members are as contained in the European Patent Office EDP file on
The European Patent Office is in no way liable for these particulars which are merely given for the purpose of information.

26-05-2026

| Patent document cited in search report | Publication date | Patent family member(s) | | Publication date |
|---|---|---|---|---|
| US 2021328220 A1 | 21-10-2021 | CN | 113574702 A | 29-10-2021 |
| | | EP | 3863090 A1 | 11-08-2021 |
| | | ES | 3036890 T3 | 25-09-2025 |
| | | HU | E071866 T2 | 28-09-2025 |
| | | KR | 20200090128 A | 28-07-2020 |
| | | US | 2021328220 A1 | 21-10-2021 |
| | | WO | 2020149683 A1 | 23-07-2020 |
| US 2022416244 A1 | 29-12-2022 | CN | 114730875 A | 08-07-2022 |
| | | CN | 118588910 A | 03-09-2024 |
| | | CN | 118588912 A | 03-09-2024 |
| | | EP | 4071860 A1 | 12-10-2022 |
| | | EP | 4725901 A2 | 15-04-2026 |
| | | JP | 7567104 B2 | 16-10-2024 |
| | | JP | 7776593 B2 | 26-11-2025 |
| | | JP | 7802128 B2 | 19-01-2026 |
| | | JP | 2023512011 A | 23-03-2023 |
| | | JP | 2024164132 A | 26-11-2024 |
| | | JP | 2024164133 A | 26-11-2024 |
| | | KR | 20220122714 A | 02-09-2022 |
| | | US | 2022416244 A1 | 29-12-2022 |
| | | US | 2023369591 A1 | 16-11-2023 |
| | | WO | 2022077374 A1 | 21-04-2022 |

EPO FORM P0459

For more details about this annex : see Official Journal of the European Patent Office, No. 12/82